# EUROPÄISCHE PATENTANMELDUNG

(11) **EP 0 787 455 A1**
(43) Veröffentlichungstag der Anmeldung: **06.08.1997**
(21) Anmeldenummer: 96109848.0
(22) Anmeldetag: 19.06.1996
(51) Int. Cl.: A47J 39/00

(54) **Einrichtung zum induktiven Erwärmen von Speisen**

(30) Priorität: 05.02.1996 DE 29601788 U
(71) Anmelder: Ratiotherm GmbH Tablettsysteme, 28857 Syke (DE)
(72) Erfinder: Philipp, Eckhard, 27243 Kirchseelte (DE); Philipp, Sven, 28816 Stuhr (DE)
(74) Vertreter: Hoormann, Walter, Dr.-Ing.

(57) **Zusammenfassung**

Einrichtung zum induktiven Erwärmen von Speisen, die in wenigstens bereichsweise elektrisch leitenden Gefäßen portioniert sind, welche jeweils an einer vorgegebenen Erwärmungsstelle auf einem Tablett (2) abgestellt sind, mit mehreren mit gegenseitigem Abstand regalartig übereinander bzw. nebeneinander in einem Gehäuse befestigten, horizontalen Heizböden (14) die jeweils an einer Heizstelle eine mit hochfrequentem Wechselstrom beaufschlagbare Spule aufweisen, wobei die Tabletts (2) jeweils an Stützmitteln (18) so in dem Gehäuse abzustützen sind, daß ihre Erwärmungsstellen jeweils im wesentlichen vertikal fluchtend zu einer Heizstelle eines Heizbodens (14) angeordnet sind, wobei daß Gehäuse (3) mit getrennt von den Heizböden (14) ausgebildeten Stützmitteln (18) zum Abstützen der Tabletts (2) versehen ist, die so angeordnet sind, daß die Tabletts (2) in ihrer Erwärmungsposition jeweils mit Abstand (c) zu einem benachbarten Heizboden (14) angeordnet sind, wobei das Gehäuse (3) zweiteilig ausgebildet ist und die Heizböden (14) an einem ersten Gehäuseteil (7) befestigt sind und die Stützmittel (18) an einem zweiten Gehäuseteil (3-6, 8-10) angeordnet sind, welches zusammen mit den an ihm abgestützen Tabletts (2) relativ zum ersten Gehäuseteil (7) verfahrbar ist.

## Beschreibung

Die Erfindung betrifft eine Einrichtung zum induktiven Erwärmen bzw. Aufwärmen von Speisen, die in wenigstens bereichsweise elektrisch leitenden Gefäßen (sog. Induktionsgeschirr) portioniert sind, weiche jeweils an einer vorgegebenen Erwärmungsstelle auf einem Tablett abgestellt sind, insbs. zum Aufwärmen von Patienten-Menüs in Krankenhäusern, mit mehreren mit gegenseitigem, i.a. konstantem Abstand regalartig übereinander und ggfs. nebeneinander in einem im wesentlichen quaderförmigen Gehäuse befestigten, im wesentlichen horizontalen Heizböden, die jeweils an einer einer Erwärmungsstelle eines zugeordneten Tabletts zugeordneten Heizstelle eine mit hochfrequentem Wechselstrom beaufschlagbare Spule aufweisen, wobei die mit Gefäßen belegten Tabletts jeweils an Stützmitteln so in dem Gehäuse abzustützen sind, daß ihre Erwärmungsstellen in der eingegebenen Erwärmungsposition jeweils im wesentlichen fluchtend zu einer Heizstelle eines Heizbodens angeordnet sind.

Insbesondere bei Speisen-Verteilsystemen in Krankenhäusern, Seniorenheimen u.dgl. werden die auszugebenden Speisen, insbs. Menüs, i. a. bereits im Küchenbereich, auf Teller, in Schüsseln u.dgl. portioniert. Dabei werden die jeweils für eine zu versorgende Person bestimmten Speisengefäße auf einem Tablett abgestellt und es wird eine Anzahl von bspw. zwanzig belegten Tabletts über- und ggfs. nebeneinander in einen sog. Tablettwagen eingegeben. Die mit belegten Tabletts versehenen Tablettwagen werden sodann jeweils aus dem Küchenbereich zu der betreffenden Krankenstation od.dgl. verfahren, wo die Tabletts einzeln nacheinander entnommen und an die zu versorgenden Personen übergeben werden.

Um dabei einem übermäßigen Abkühlen warmer Speisen entgegenzuwirken, werden häufig Isoliertabletts verwendet. Es hat sich jedoch gezeigt, daß diese Maßnahme insbs. bei relativ langen Transportwegen häufig nicht ausreicht, um Speisen bis zu ihrem Verzehr hinreichend warmzuhalten.

Da zu stark abgekühlte Speisen zu einer Qualitätseinbuße führen und eine zu starke Abkühlung auch gegen einschlägige Empfehlungen bzw. Vorschriften verstößt, die eine Mindesttemperatur von 65°C bei der Übergabe an den betreffenden Patienten od.dgl. vorschreiben, sind auch bereits elektrisch beheizbare Tablettwagen bekanntgeworden, in denen zum warmen Verzehr vorgesehene Speisen gezielt warmzuhalten bzw. aufzuwärmen sind. Dabei können derartige Tablettwagen nicht in der Art von Heizöfen ausgebildet sein, welche den Inhalt des Tablettwagens insgesamt erwärmen, weil Menüs häufig auch Speisen wie Salat, Dessert o.dgl. enthalten, die bestimmungsgemäß nicht erheblich erwärmt werden dürfen. Man hat daher bei diesen beheizbaren Tablettwagen, wie sie aus der DE-GM 93 10 368 bekannt sind, eine induktive Heizmöglichkeit geschaffen, indem man warme Speisen in sog. Induktionsgeschirr abgefüllt, welches wenigstens bereichsweise elektrisch leitend ausgebildet ist, und die mit Speisengefäßen belegten Tabletts in dem Tablettwagen einem hochfrequenten Magnetfeld ausgesetzt hat, welches in den elektrisch leitenden Teilen des Induktionsgeschirrs Wirbeiströme induziert, die zu einer Erwärmung und damit zu einer Aufwärmung der in diesem Geschirr enthaltenen Speisen führen, während in normalem Geschirr portionierte Speisen dabei bestimmungsgemäß nicht erwärmt werden. Dabei reicht es im allgemeinen völlig aus, wenn derartiges Induktionsgeschirr bspw. und bevorzugterweise an seiner Unterseite mit einem geeigneten Metall wie bspw. Silber dünn beschichtet ist.

Um diese induktive Erwärmung bewirken zu können, ist die aus der DE-GM 93 10 368 bekannte gattungsgemäße Einrichtung mit einer der Anzahl einzugebender Tabletts entsprechenden Anzahl von Heizböden versehen, in denen jeweils wenigstens eine mit hochfrequentem Wechselstrom beaufschlagbare Spule angeordnet ist. Die Heizböden, deren Breite und Tiefe im wesentlichen den entsprechenden Abmessungen eines Tabletts entsprechen, sind jeweils an drei Rändern mit dem im wesentlichen quaderförmigen Gehäuse der Erwärmungseinrichtung verbunden (nämlich mit deren Rückwand und zwei Seitenwänden bzw. einer Seitenwand und einer Zwischenwand), so daß es gesonderter Stützmittel für die Tabletts nicht bedarf.

Das Gehäuse ist bei der bekannten Einrichtung nicht nur deshalb kastenförmig (mit einer offenen Ein- und Ausgabeseite) versehen, um eine gewisse Wärmeisolierung während des Transports zu erzielen, sondern um damit auch einen Faraday'schen Käfig zu schaffen, mittels dessen während des Aufwärmens zu bewirken ist, daß das erzeugte Magnetfeld im wesentlichen nicht aus der Einrichtung austritt. Die Gehäusewände bestehen daher aus einem geeigneten Metall.

Obwohl sich diese bekannte Einrichtung, die insgesamt einen in der beschriebenen Weise induktiv beheizbaren Tablettwagen darstellt und demgemäß insgesamt verfahrbar ist, in der Praxis bestens bewährt hat, weist sie den Nachteil auf, daß sie nach Wiedereingabe der mit entleerten Gefäßen belegten Tabletts aufgrund ihrer elektrischen Einrichtungen nicht in einer automatischen Wascheinrichtung gesäubert werden kann, wie dieses heutzutage bei hochautomatisierten Speisen-Verteilsystemen gefordert wird.

Ein weiterer Nachteil ist der für jeden Tablettwagen zutreffende, kostenmäßig erhebliche Aufwand für die Elektroinstallation. Dabei kommt hinzu, daß ggfs. in einem Krankenhaus od.dgl. noch in größerer Anzahl vorhandene konventionelle Tablettwagen nicht auf eine induktive Beheizung umgerüstet und danach entsprechend weiterverwendet werden können, sondern ausgemustert werden müssen, obwohl sie sich möglicherweise noch in einem hervorragenden Zustand befinden.

Der vorliegenden Erfindung liegt demgemäß die Aufgabe zugrunde, eine gattungsgemäße Einrichtung zum induktiven Erwärmen von Speisen zu schaffen, die eine maschinelle Reinigung der noch in ihrem Gehäuse abgestützten Tabletts in einer Waschstraße od.dgl. gestattet, wobei darüber hinaus insbs. für größere Krankenstationen od.dgl., die mit mehreren Tablettwagen versorgt werden müssen, der erforderliche Investitionsaufwand verringert und nicht zuletzt die Möglichkeit geschaffen werden soll, ggfs. noch vorhandene konventionelle Transportwagen weiterverwenden zu können.

Die Lösung dieser Aufgabe besteht erfindungsgemäß darin, daß das Gehäuse mit getrennt von den Heizböden ausgebildeten Stützmitteln zum Abstützen der Tabletts versehen ist, die so angeordnet bzw. ausgebildet sind, daß die Tabletts in ihrer in die Einrichtung eingegebenen Erwärmungsposition jeweils mit vertikalem Abstand zu einem benachbarten Heizboden angeordnet sind, und daß das Gehäuse zweiteilig ausgebildet ist, wobei die Heizböden an einem ersten Gehäuseteil befestigt sind und die Stützmittel an einem zweiten Gehäuseteil angeordnet sind, welches zusammen mit den an ihm abgestützten, belegten Tabletts relativ zum ersten Gehäuseteil verfahrbar ist.

Eine bevorzugte Ausgestaltung der vorliegenden Erfindung besteht darin, daß die Heizböden in der Art von plattenförmigen Zungen bzw. Kragträgern ausgebildet bzw. angeordnet sind, die nur an ihrem einen Rand am ersten Gehäuseteil befestigt sind und von diesem frei vorstehen, wobei ihre Befestigung bevorzugt an ihrem rückwärtigen Rand erfolgt.

Dabei können die Heizböden ebenso wie ihre Befestigungen am ersten Gehäuseteil ersichtlich mit relativ geringer Festigkeit ausgestattet sein, weil sie auch während des Erwärmungsbetriebes nicht mehr wie bisher jeweils durch ein Tablett belastet sind, auf dem mit Speisen gefüllte Gefäße abgestellt sind.

Das die Heizböden tragende erste Gehäuseteil kann als im wesentlichen ebener Rahmen bzw. als ebene Platte ausgebildet sein und eine Seitenwand des Gehäuses und damit der gesamten Einrichtung (vorzugsweise deren Rückwand) bilden.

Obwohl auch das die Heizböden haltende zweite Gehäuseteil grundsätzlich mobil ausgebildet sein kann, ist es bevorzugt ortsfest angeordnet, wobei ggfs. bei ortsfester Anordnung eine höhenmäßige Verstellbarkeit vorgesehen sein kann, um eine Anpassung an unterschiedliche zweite Gehäuseteile zu ermöglichen.

Die Stützmittel zum Abstützen der Tabletts sind bevorzugt so am zweiten Gehäuseteil angeordnet, daß sich die Tabletts in der Erwärmungsposition jeweils unmittelbar benachbart zu einem Heizboden befinden, und zwar bevorzugt unmittelbar oberhalb eines Heizbodens, so daß zwar noch eine relative Verfahrbarkeit des mit den belegten Tabletts bestückten zweiten Gehäuseteils zum ersten Gehäuseteil (und damit zu den Heizböden) gewährleistet ist, das auf den Tabletts befindliche Induktionsgeschirr aber in der Erwärmungsposition benachbart zu einer bzw. mehreren Spulen eines Heizbodens in einem Bereich angeordnet ist, in dem das erzeugte Magnetfeld besonders stark ist. Lediglich am Rande sei erwähnt, daß sich dabei Induktionsgeschirr im allgemeinen dennoch auch noch im Bereich des Magnetfeldes einer ggfs. darüber befindlichen Spule befindet.

Um beim Zusammen- und Auseinanderfahren der beiden Gehäuseteile die gewünschte und erforderliche Zentrierung der Tabletts zu den Heizböden zu gewährleisten, ist bevorzugt wenigstens eine Führung vorgesehen, mittels welcher die beiden Gehäuseteile bei einem relativen Verfahren in die bzw. aus der Erwärmungsposition so relativ zueinander zu führen sind, daß die Heizböden nicht mit dem zweiten Gehäuseteil und die Tabletts nicht mit dem ersten Gehäuseteil kollidieren können. Hierfür sind bevorzugt an den Seiten des ersten Gehäuseteils bis über die Vorderkanten der Heizböden vorstehende Führungsbügel od.dgl. angeordnet, die beim relativen Verfahren der beiden Gehäuseteile mit Führungsflächen des zweiten Gehäuseteils zusammenwirken.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:
- Fig. 1: eine erfindungsgemäße Einrichtung zum induktiven Erwärmen von Speisen im Betriebszustand (Erwärmungsposition) in perspektivischer Darstellung;
- Fig. 2: die Einrichtung gem. Fig. 1 (in einer etwas anderen Perspektive) beim Auseinanderfahren der beiden Gehäuseteile nach der Erwärmung;
- Fig. 3: das mit den Heizböden versehene erste Gehäuseteil nach vollständigem Verfahren des mit den Tabletts versehenen zweiten Gehäuseteils;
- Fig. 4: eine perspektivische Darstellung einer Variante des zweiten Gehäuseteils;
- Fig. 5: das zweite Gehäuseteil in Ausgestaltung gem. Fig. 3 (ohne Führungen und Steuergerät) in vergrößerter perspektivischer Darstellung;
- Fig. 6: eine schematisierte Seitenansicht auf die offene Seite des ersten Gehäuseteils; und
- Fig. 7: eine schematische Schnittdarstellung durch die Einrichtung in Richtung der Schnittlinie VII - VII in Fig. 2 gesehen, jedoch im Betriebszustand gem. Fig. 1.

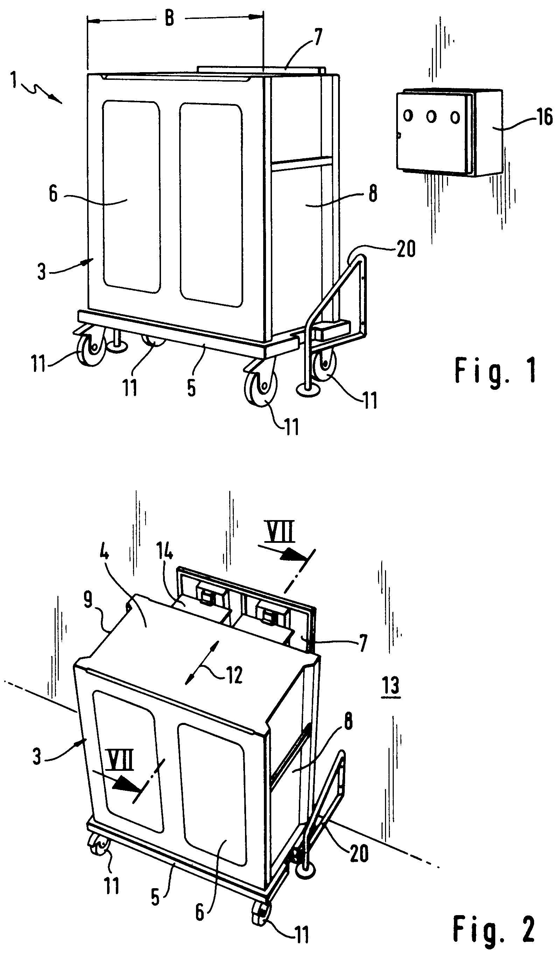

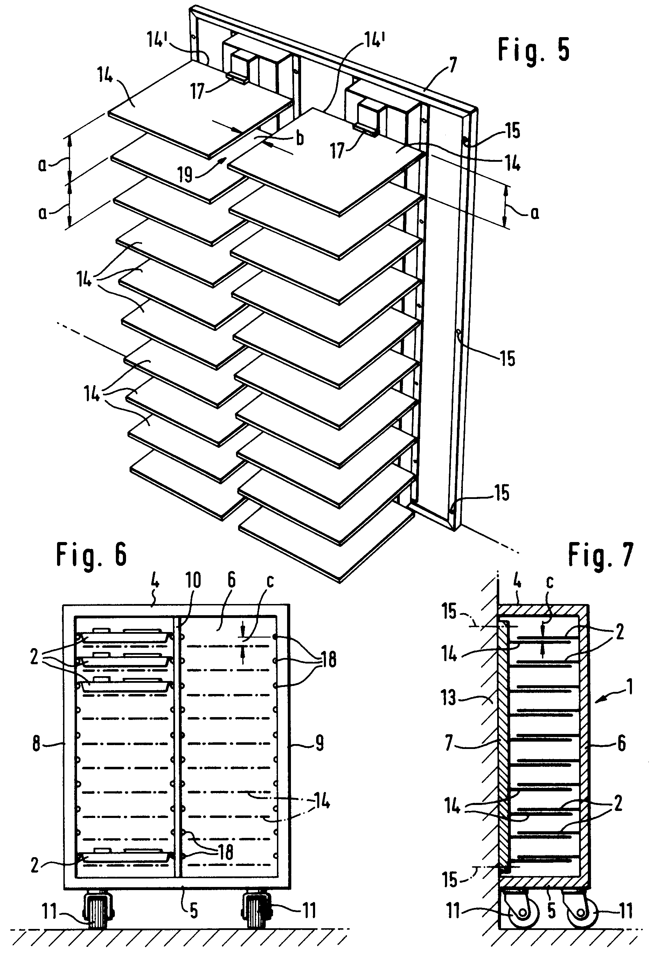

Fig. 1 zeigt eine im ganzen mit 1 bezeichnete Erwärmungseinrichtung zum induktiven Erwärmen bzw. Aufwärmen von Speisen, die in Induktionsgeschirr portioniert sind, welches hierfür auf Tabletts 2 abgestellt ist (s. Fig. 6), die jeweils ein vollständiges Menü enthalten.

Die Erwärmungseinrichtung 1 besitzt ein im wesentlichen quaderförmiges, kastenförmiges Gehäuse 3 mit einer Oberseite 4, einem Boden 5, einer Vorderwand 6, einer Rückwand 7, zwei Seitenwänden 8 und 9 sowie einer mittig zwischen den Seitenwänden 8 und 9 angeordneten Zwischenwand 10 (s. Fig. 6), wobei das Gehäuse 3 zweiteilig ausgebildet ist. Dabei bildet die Rückwand 7 ein erstes Gehäuseteil und die Wände 4 - 6 und 8 - 10 bilden ein zweites Gehäuseteil, welches auf Laufrollen 11 in Richtung des Pfeiles 12 (s. Fig. 2) relativ zu dem von der Rückwand 7 gebildeten, ortsfest an einer Wand 13 angeordneten zweiten Gehäuseteil verfahrbar ist, wie weiter unten im einzelnen noch beschrieben ist.

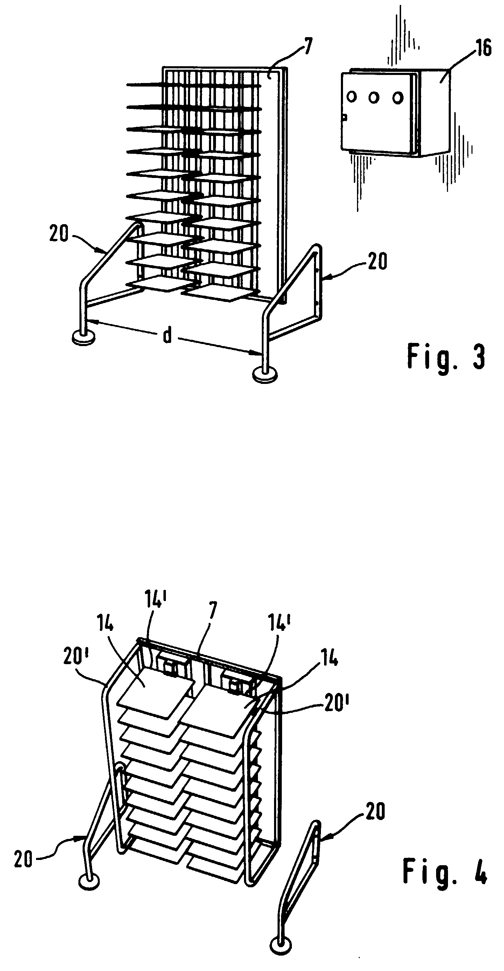

Wie insbs. aus den Fig. 3 - 5 erkennbar ist, sind an der Rückwand 7 zwei Reihen von jeweils zehn horizontalen Heizböden 14 angeordnet, wobei die Heizböden 14 jeder Reihe vertikal zueinander fluchten und ihr gegenseitiger Vertikalabstand a konstant ist. Nebeneinander angeordnete Heizböden 14, 14 fluchten horizontal zueinander. Zwischen ihnen befindet sich jeweils ein Spalt einer Breite b. Die Rückwand 7 weist mehrere Durchgangsbohrungen auf und ist dort mit Befestigungsmitteln wie Schrauben an die Wand 13 geschraubt.

In den Heizböden 14 befindet sich jeweils mindestens eine in der Zeichnung nicht erkennbare Spule, wobei die Spulen über nicht dargestellte elektrische Leitungen mit einem Steuergerät 16 verbunden sind, in dem die übrigen Komponenten einer induktiven Heizeinrichtung angeordnet sind, mittels welcher die Spulen zur Erzeugung eines magnetischen Wechselfeldes mit hochfrequentem Wechselstrom zu beschicken sind, wenn eine Erwärmung erfolgen soll.

Wie insbs. den Fig. 3 - 5 zu entnehmen ist, sind die Heizböden 14 in der Art plattenförmiger Zungen angeordnet bzw. ausgebildet, die lediglich mit ihrem rückwärtigen Rand 14' an der Rückwand 7 befestigt sind und von diesem frei vorstehen. Die Heizböden 14 selbst wie auch ihre Befestigungsstellen 17 bedürfen nur einer relativ geringen Festigkeit, da die Heizböden 14 - anders als bei vorbekannten induktiv beheizbaren Tablettwagen - nicht auch als Widerlager bzw. Stützmittel für die Tabletts 2 dienen.

Vielmehr sind zum Abstützen der Tabletts 2 an den Innenseiten der Seitenwände 8 und 9 sowie an der Zwischenwand 10 gesonderte Stützmittel 18 vorgesehen (s. Fig. 6) die z.B. als horizontale Stützleisten oder Ausformungen ausgebildet sein können, so daß die Tabletts 2 jeweils mit ihrem Rand auf zwei einander zugeordneten Stützmitteln 18, 18 in horizontaler Anordnung abgestützt werden können. Dabei sind die Stützmittel 18 so angeordnet, daß sich die Tabletts 2 in der Erwärmungsposition (Fig. 1) jeweils unmittelbar oberhalb eines Heizbodens 14 befinden. Ihre relative Stellung zu den Heizböden 14 ist in Fig. 6 erkennbar, welche eine Seitenansicht auf die offene Rückseite des zweiten Gehäuseteils 4 - 6, 8 - 10 zeigt, wobei dort die Heizböden 14 mit strichpunktierten Linien in der zusammengefahrenen Stellung der beiden Gehäuseteile und damit in der Erwärmungsposition angedeutet sind. Noch deutlicher ergibt sich dieses aus der schematischen Darstellung gem. Fig. 7, in welcher die Stützmittel 18 zum Abstützen der Tabletts 2 allerdings der besseren Übersicht halber fortgelassen und nur die eingegebenen Tabletts angedeutet sind. Es ist erkennbar, daß jeweils zwischen einem Heizboden 14 und einem unmittelbar benachbart darüber angeordneten Tablett 2 ein vertikaler Abstand c vorhanden ist, so daß die beiden Gehäuseteile kollisionsfrei in- und auseinandergefahren werden können.

Um dabei eine Kollision der vom ersten Gehäuseteil (= Rückwand 7 des Gehäuses 3) frei vorkragenden Heizböden 14 mit den Seitenwänden 8, 9 und der Zwischenwand 10 zu verhindern, die sich in der Erwärmungsposition im Spalt 19 zwischen den beiden Reihen von Heizböden 14 befindet, sind an den Seiten des ortsfesten ersten Gehäuseteils (= Rückwand 7) bis über die Vorderkanten der Heizböden 14 vorstehende Führungsbügel 20 angeordnet, die beim relativen Verfahren der beiden Gehäuseteile mit von den Außenseiten der Seitenwände 8, 9 gebildeten Führungsflächen des zweiten Gehäuseteils zusammenwirken. Die Führungsbügel 20 können mit der Rückwand 7 verbunden oder aber auch von dieser getrennt sein. Ihr gegenseitiger lichter Abstand d ist (nur) etwas größer als die Gehäusebreite B, so daß das mit den Tabletts 2 versehene zweite Gehäuseteil beim relativen Verfahren zum ersten Gehäuseteil und damit zu den Heizböden 14 auf einfache Weise zu zentrieren ist, ohne daß es zu schädlichen Kollisionen mit den Heizböden 14 oder den Tabletts 2 kommen kann.

Selbstverständlich können auch unterschiedlichste andere Führungen zwischen den beiden Gehäuseteilen vorgesehen sein. So zeigt bspw. Fig. 4 gegenüber der Ausbildung gem. Fig. 3 eine Variante mit alternativen Führungsbügeln 20', die sich über die gesamte Höhe der Rückwand 7 erstrecken und ebenfalls bis über die Vorderkanten der Heizböden 14 vorstehen. Für derartige Führungsbügel 20' bedarf es jedoch im Inneren des verfahrbaren zweiten Gehäuseteils entsprechender Aufnahmetaschen od.dgl. zwischen den Seitenwänden 8, 9 und weiteren Zwischenwänden, an denen dann die Stützmittel 18 angeordnet sind. Hierfür bedarf es dann ggfs. einer speziellen Ausgestaltung der zweiten Gehäuseteile.

Mit den erfindungsgemäßen Erwärtmungseinrichtungen 1 kann im Küchen- wie im Reinigungsbereich wie mit konventionellen, nicht beheizbaren Tablettwagen gearbeitet werden, d.h. das von dem ersten Gehäuseteil 7 (und damit von den Heizböden 14) gelöste zweite Gehäuseteil wird in der Küche mit gefüllten Tabletts bestückt, die dort jeweils auf den Stützmitteln 18 abgestützt werden, wobei im allgemeinen im Gegensatz zu der insoweit vereinfachten Darstellung gem. Fig. 6 eine im wesentlichen vollständige Bestückung erfolgt, und wird sodann auf seinen Laufrollen 11 zu der im Bereich einer Ausgabestation (also bspw. einer Krankenstation) fest angeordneten, aus der Gehäuserückwand 7 und den an dieser befestigten Heizböden 14 bestehenden "Andockstation" verfahren und dort mittels der Führungen 20 bzw. 20' geführt an diese herangefahren. In der eingefahrenen Erwärmungsposition sind die Heizböden 14 zu den Tabletts 2 zentriert, so daß die Erwärmung eingeschaltet werden kann. Sobald die Speisen auf die gewünschte Temperatur aufgewärmt worden sind, wird das zweite Gehäuseteil wieder von der "Andockstation" weggefahren (Fig. 2), so daß die Tabletts mit den erwärmten Speisen entnommen werden können. Dabei besteht ein besonderer weiterer Vorteil darin, daß auf größeren Krankenstationen od.dgl. mit einer einzigen "Andockstation" mehrere mit Tabletts bestückte zweite Gehäuseteile nacheinander erwärmt werden können. Weiterhin ist es höchst vorteilhaft, daß unter entsprechender Anpassung der ersten Gehäuseteile und der an ihnen befestigten Heizböden 14 als zweite Gehäuseteile ggfs. noch vorhandene konventionelle Tablettwagen verwendet werden können.

Wenn die verfahrbaren zweiten Gehäuseteile nach Einnahme der Speisen wieder mit Tabletts und geleerten Gefäßen bestückt sind, können sie - ggfs. nach Entnahme des noch vollständig zu entleerenden und ggfs. gesondert zu reinigenden Geschirrs - mit den eingegebenen Tabletts in eine Waschstraße od.dgl. eingeführt werden, wie dieses in zunehmendem Maße gewünscht wird.

Durch geeignete Endschalter od.dgl. kann sichergestellt werden, daß die Spulen der Heizböden 14 nicht mit Strom zu beaufschlagen sind, wenn am ersten Gehäuseteil kein zweites Gehäuseteil ordnungsgemäß angedockt ist, womit auszuschließen ist, daß die Umgebung ggfs. mit einem starken Magnetfeld beaufschlagt wird. Dieses wird, wie bereits ausgeführt wurde, im Andockzustand dadurch vermieden, daß die Spulen im wesentlichen vollständig von einem Metallgehäuse umgeben sind.

| BEZUGSZEICHENLISTE | | |
|---|---|---|
| 1 | Erwärmungseinrichtung | 1 |
| 2 | Tabletts | 2 |
| 3 | Gehäuse (von 1) | 3 |
| 4 | Oberseite (von 3) | 4 |
| 5 | Boden (von 3) | 5 |
| 6 | Vorderwand (von 3) | 6 |
| 7 | Rückwand (von 3) | 7 |
| 8 | Seitenwand | 8 |
| 9 | Seitenwand | 9 |
| 10 | Zwischenwand | 10 |
| 11 | Laufrollen | 11 |
| 12 | Pfeil | 12 |
| 13 | Wand | 13 |
| 14 | Heizböden 14' rückwärtiger Rand (von 14) | 14 |
| 15 | Befestigungsmittel (für 7) | 15 |
| 16 | Steuergerät | 16 |
| 17 | Befestigungsstellen (von 14 an 7) | 17 |
| 18 | Stützmittel (für 2) | 18 |
| 19 | Spalt | 19 |
| 20 | Führungsbügel | 20 |

## Patentansprüche

1. Einrichtung zum induktiven Erwärmen von Speisen, die in wenigstens bereichsweise elektrisch leitenden Gefäßen portioniert sind, welche jeweils an einer vorgegebenen Erwärmungsstelle auf einem Tablett abgestellt sind, insbs. zum Aufwärmen von Patienten-Menüs in Krankenhäusern, mit mehreren mit gegenseitigem, i.a. konstanten Abstand regalartig übereinander und ggfs. nebeneinander in einem im wesentlichen quaderförmigen Gehäuse befestigten, im wesentlichen horizontalen Heizböden, die jeweils an einer Heizstelle eine mit hochfrequentem Wechselstrom beaufschlagbare Spule aufweisen, wobei die Tabletts jeweils an Stützmitteln so in dem Gehäuse abzustützen sind, daß ihre Erwärmungsstellen jeweils im wesentlichen vertikal fluchtend zu einer Heizstelle eines Heizbodens angeordnet sind, dadurch gekennzeichnet, daß das Gehäuse (3) mit getrennt von den Heizböden (14) ausgebildeten Stützmitteln (18) zum Abstützen der Tabletts (2) versehen ist, die so angeordnet bzw. ausgebildet sind, daß die Tabletts (2) in ihrer Erwärmungsposition jeweils mit Abstand (c) zu einem benachbarten Heizboden (14) angeordnet sind; und daß das Gehäuse (3) zweiteilig ausgebildet ist, wobei die Heizböden (14) an einem ersten Gehäuseteil (7) befestigt sind und die Stützmittel (18) an einem zweiten Gehäuseteil (3 - 6, 8 - 10) angeordnet sind, welches zusammen mit den an ihm abgestützten Tabletts (2) relativ zum ersten Gehäuseteil (7) verfahrbar ist.

2. Einrichtung nach Anspruch 1, dadurch gekennzeichnet, daß die Heizböden (14) in der Art plattenförmiger Zungen ausgebildet sind, die nur an ihrem einen Rand (14') am ersten Gehäuseteil (7) befestigt sind und von diesem frei vorstehen.

3. Einrichtung nach Anspruch 2, dadurch gekennzeichnet, daß die Heizböden (14) an ihrem rückwärtigen Rand (14') am ersten Gehäuseteil (7) befestigt sind.

4. Einrichtung nach Anspruch 2 oder 3, dadurch gekennzeichnet daß das erste Gehäuseteil (7) als im wesentlichen ebener Rahmen/ebene Platte ausgebildet ist und eine Wand des Gehäuses (3) bildet.

5. Einrichtung nach einem oder mehreren der vorhergenden Ansprüche, dadurch gekennzeichnet, daß die Stützmittel (18) so am zweiten Gehäuseteil angeordnet sind, daß sich die Tabletts (2) in der Erwärmungsposition jeweils unmittelbar benachbart zu einem Heizboden (14) befinden.

6. Einrichtung nach Anspruch 5, dadurch gekennzeichnet, daß die Stützmittel (18) so angeordnet sind, daß sich die Tabletts in Erwärmungsposition jeweils unmittelbar oberhalb eines Heizbodens (14) befinden.

7. Einrichtung nach einem oder mehreren der vorhergehenden Ansprüche, dadurch gekennzeichnet, daß das mit den Heizböden (14) verbundene erste Gehäuseteil (7) ortsfest anzuordnen ist.

8. Einrichtung nach Anspruch 7, dadurch gekennzeichnet, daß das erste Gehäuseteil (7) höhenverstellbar ist.

9. Einrichtung nach einem oder mehreren der vorhergehenden Ansprüche, dadurch gekennzeichnet, daß wenigstens eine Führung (20; 20') vorgesehen ist, mittels welcher die beiden Gehäuseteile (7 bzw. 4 - 6, 8 - 10) beim relativen Verfahren in die bzw. aus der Erwärmungsposition so relativ zueinander zu führen sind, daß die Heizböden (14) nicht mit dem zweiten Gehäuseteil und die Tabletts (2) nicht mit dem ersten Gehäuseteil kollidieren.

10. Einrichtung nach Anspruch 9, dadurch gekennzeichnet, daß an den Seiten des ersten Gehäuseteils (7) bis über die Vorderkanten der Heizböden (14) vorstehende Führungsbügel (20) od.dgl. angeordnet sind, die beim relativen Verfahren der beiden Gehäuseteile (7 bzw. 4 - 6, 8 - 10) mit Führungsflächen (8, 9) des zweiten Gehäuseteils zusammenwirken.
